# EUROPÄISCHE PATENTANMELDUNG

(11) **EP 2 801 793 A1**
(43) Veröffentlichungstag der Anmeldung: **12.11.2014**
(21) Anmeldenummer: 13167059.8
(22) Anmeldetag: 08.05.2013
(51) Int. Cl.: G01D 5/244, G01D 5/245

(54) **Vorrichtung zur Erfassung der absoluten Winkelposition eines drehbaren Drehelements**

(71) Anmelder: BAUMER ELECTRIC AG, 8500 Frauenfeld (CH)
(72) Erfinder: Blanc, Didier, 8304 Wallisellen (CH); Zepf, Stephan, 78262 Gailingen (DE); Berweger, Michael, 8500 Frauenfeld (CH)
(74) Vertreter: Strauss, Steffen

(57) **Zusammenfassung**

Die Erfindung betrifft eine Vorrichtung zur Erfassung der absoluten Winkelposition eines um mehrere Umdrehungen drehbaren Drehelements, wie einer Welle, über wenigstens zwei volle Umdrehungen. Bei dem bisher bekannten System werden zwei Reed-Sensoren, ein Feinwertgeber, zwei Hallsensoren und eine Auswerteschaltung verwendet, um ein Multiturnsignal zu erhalten. Nachteilig bei diesem System ist jedoch, dass für einige Anwendungen zu groß ist und viel Strom verbraucht. Die Aufgabe der Erfindung ist es, die oben genannten Nachteile auszuräumen. Erfindungsgemäß wird die Aufgabe gelöst durch eine Vorrichtung (1) mit einem Feinwertgeber (4), durch den ein im Betrieb innerhalb einer vollständigen Umdrehung mehrdeutiges, absolutes Feinwertsignal (7) erzeugbar ist, und mit einem einzigen Satz von identischen Grobwertsensorelementen (5), durch die im Betrieb ein innerhalb einer vollständigen Umdrehung eindeutiges Grobwertsignal (6) erzeugbar ist, und mit einer Auswerteschaltung (8), durch die aus dem Grobwertsignal (8) und dem Feinwertsignal (7) ein Absolutsignal (9) erzeugbar ist.

## Beschreibung

Die Erfindung betrifft eine Vorrichtung zur Erfassung der absoluten Winkelposition eines drehbaren Drehelements, wie einer Welle

Bei der Überwachung eines drehbaren Drehelementes ist oft nicht nur die Winkelposition innerhalb einer Umdrehung, sondern auch die Anzahl der von dem Drehelement durchgeführten vollständigen Umdrehungen von Interesse. Aus den gemessenen Positionswerten können weitere Parameter, wie etwa die Drehrichtung, die Winkelgeschwindigkeit oder die Winkelbeschleunigung abgeleitet werden. Diese Informationen können beispielsweise zur Steuerung eines das Drehelement antreibenden Motors genutzt werden.

Bei dem bisher bekannten System werden zwei Reed-Sensoren verwendet, um die Umdrehungen des Drehelementes zu erfassen. Die Kombination der beiden Reed-Sensoren ergibt dabei eine Halbumdrehungsinformation, die anschließend zu vollständigen Umdrehungen aufsummiert werden kann. Unabhängig davon wird eine Information aus einem Feinwertgeber, der eine fein aufgelöste absolute Position, die jedoch innerhalb einer vollen Umdrehung mehrdeutig ist, mit Informationen aus zwei Hallsensoren, die eine grob aufgelöste, aber innerhalb einer vollen Umdrehung eindeutige Grobinformation liefern, kombiniert, um einen innerhalb einer vollständigen Umdrehung eindeutigen Absolutwinkel, repräsentiert durch einen Absolutwert, zu erhalten. In einer nachgeschalteten Signalverarbeitung können der Absolutwinkel und die Umdrehungszahl, die die vollständigen Umdrehungen repräsentiert, zu einem die absolute Winkelposition repräsentierenden Absolutsignal kombiniert werden.

Nachteilig bei diesem System ist, dass es für manche Anwendungen zu viel Platz benötigt. Darüber hinaus ist die Auswertung der Signale recht aufwändig. Schließlich erfordern die Sensoren und die Steuerungselektronik viel Strom.

Die Aufgabe der Erfindung ist es, die oben genannten Nachteile auszuräumen.

Erfindungsgemäß wird die Aufgabe gelöst durch eine Vorrichtung zur Erfassung der absoluten Winkelposition eines drehbaren Drehelements, wie einer Welle, mit einem Feinwertgeber, durch den ein im Betrieb innerhalb einer vollständigen Umdrehung mehrdeutiges, absolutes Feinwertsignal erzeugbar ist, und mit einem einzigen Satz von identischen Grobwertsensorelementen, durch die im Betrieb ein innerhalb einer vollständigen Umdrehung eindeutiges Grobwertsignal erzeugbar ist, und mit einer Auswerteschaltung, durch die aus dem Grobwert- und dem Feinwertsignal ein Absolutsignal erzeugbar ist, wobei in dem Absolutsignal ein innerhalb einer vollständigen Umdrehung eindeutiger Absolutwert und eine für die Anzahl der vollständigen Umdrehungen eindeutige Umdrehungszahl enthalten sind.

Jedes der Grobwertsensorelemente liefert eine vergleichsweise grobe Positionsinformation, beispielsweise eine auf eine halbe Umdrehung genaue Position. Kombiniert man zum Beispiel zwei um 90° versetzte Grobwertsensorelemente dieses Typs, so erhält man ein innerhalb einer vollständigen Umdrehungen eindeutiges Grobwertsignal, das auf 90° genau ist, also angibt, in welchem von vier Quadranten einer vollständigen Umdrehung sich das drehbare Drehelement befindet. Mit zwei weiteren, um 45° zu den beiden anderen versetzten Grobwertsensorelementen kann die Genauigkeit des Grobwertsignals auf eine Achtelumdrehung gesteigert werden. Um zu einer noch höheren Auflösung zu kommen, müssten jedoch immer mehr Grobwertsensorelemente geeignet kombiniert werden.

Um die Position mit wenig Aufwand genauer zu bestimmen, wird deshalb ein Feinwertgeber verwendet. Mit einem solchen Feinwertgeber ist es jedoch oft nur möglich, ein innerhalb eines bestimmten Bereiches, einer sogenannten Feinwertperiode, jedoch nicht innerhalb einer vollständigen Umdrehung eindeutiges Feinwertsignal zu erhalten. Beispielsweise kann eine Messung einer um die 360° umlaufenden Magnetisierung mit einem magnetoresistiven Sensor und einer daran angeschlossenen Messelektronik erfolgen. Da der magnetoresistive Sensor zwar den Betrag der Magnetisierung, aber nicht die Richtung ermitteln kann, ist das so erhaltene Feinwertsignal innerhalb einer Umdrehung nicht eindeutig.

Die erfindungsgemäße Vorrichtung weist eine Auswerteschaltung auf, durch die aus dem Grobwert- und dem Feinwertsignal ein Absolutsignal, das repräsentativ für die absolute Winkelposition, kurz Absolutposition, ist, erzeugbar ist. Sie erlaubt also eine Ermittlung der Absolutposition mit nur einem einzigen Satz von identischen Grobwertsensorelementen und einem einzigen Feinwertgeber, also mit weniger Sensoren als die eingangs erwähnte Vorrichtung aus dem Stand der Technik. Dadurch kann eine solche Vorrichtung kompakter sein. Gleichzeitig ist sie preisgünstiger und verbraucht weniger Strom.

Die folgenden jeweils für sich vorteilhaften Ausgestaltungen und Weiterentwicklungen können beliebig miteinander kombiniert werden.

Die Auswerteschaltung kann ein Multiturnmodul aufweisen, das ausgestaltet ist, das Grobwertsignal in eine innerhalb einer vollständigen Umdrehung eindeutige Grobposition und eine wenigstens vollständige Umdrehungen repräsentierende Umdrehungszahl aufzuteilen. Wird zum Beispiel die oben erwähnte Kombination aus zwei Grobwertsensorelementen, die insbesondere jeweils auf eine halbe Umdrehung genau messen und in Kombination also ein auf eine Viertelumdrehung genaues Grobwertsignal liefern können, verwendet, so stellt die auf eine Viertelumdrehung genaue Position die innerhalb einer vollständigen Umdrehung eindeutige Grobposition dar. Die wenigstens vollständige Umdrehungen repräsentierte Umdrehungszahl kann aus der Abfolge der Positionen bei zwei aufeinanderfolgenden Messungen ermittelt werden, indem zum Beispiel bei Überschreiten eines bestimmten Winkelwertes aus der einen oder der anderen Richtung eine vollständige Umdrehung zur bisherigen Umdrehungszahl addiert oder subtrahiert wird.

Die Auswerteschaltung kann ein Absolutmodul aufweisen, das ausgestaltet ist, den Absolutwert aus dem Feinwertsignal oder einem aus dem Feinwertsignal gewonnenen Feinwert und dem Grobwertsignal zu erzeugen. Das aus den Grobwertsensorelementen gewonnene Grobwertsignal kann in einem solchen Absolutwertmodul direkt mit dem Feinwertsignal aus dem Feinwertgeber zu dem innerhalb einer vollständigen Umdrehung eindeutigen Absolutwert weiterverarbeitet werden. Alternativ kann das Grobwertsignal mit einem aus dem Feinwertsignal gewonnenen Feinwert kombiniert werden.

Alternativ oder zusätzlich zu der eben genannten Ausgestaltung eines Absolutwertmoduls kann die Auswerteschaltung auch ein Absolutmodul aufweisen, das ausgestaltet ist, den Absolutwert aus dem Feinwertsignal oder dem Feinwert und der Grobposition zu erzeugen. Bei dieser Ausgestaltung ist es aber notwendig, dass ein Multiturnmodul vorhanden ist, das die Grobposition aus dem Grobwertsignal gewinnt. Anschließend wird die so gewonnene Grobposition mit dem Feinwertsignal oder dem Feinwert kombiniert und der Absolutwert erzeugt.

Weist die Vorrichtung ein so ausgestaltetes Multiturnmodul auf, so kann die Auswerteschaltung ein Absolutmodul aufweisen, das ausgestaltet ist, aus dem Absolutwert und der Umdrehungszahl das Absolutsignal zu erzeugen. Ein solches Absolutsignal kann vergleichsweise einfach strukturiert sein. Es kann lediglich den eindeutigen Absolutwert und die eindeutige Umdrehungszahl nebeneinander stellen, ohne Vergleiche oder Berechnungen durchzuführen.

Die Auswerteschaltung kann alternativ oder zusätzlich ein Multiturnmodul aufweisen, das ausgestaltet ist, das Grobwertsignal in eine innerhalb einer vollständigen Feinwertperiode eindeutige Grobposition und eine wenigstens vollständige Feinwertperioden repräsentierende Feinwertperiodenanzahl aufzuteilen. Wird zum Beispiel die oben erwähnte Kombination aus zwei Grobwertsensorelementen, die insbesondere jeweils auf eine halbe Umdrehung genau messen und in Kombination also ein auf eine Viertelumdrehung genaues Grobwertsignal liefern können, verwendet, so stellt die auf eine Viertelumdrehung genaue Position die innerhalb einer Feinwertperiode eindeutige Grobposition dar. Die wenigstens vollständige Feinwertperioden repräsentierte Feinwertperiodenanzahl kann aus der Abfolge der Positionen bei zwei aufeinanderfolgenden Messungen ermittelt werden, indem zum Beispiel bei Überschreiten eines bestimmten Winkelwertes aus der einen oder der anderen Richtung eine Feinwertperiode zur bisherigen Feinwertperiodenanzahl addiert oder subtrahiert wird.

Die Auswerteschaltung kann ein Absolutmodul aufweisen, das ausgestaltet ist, den Absolutwert aus dem Feinwertsignal oder dem Feinwert und der Feinwertperiodenanzahl zu erzeugen.

Alternativ oder zusätzlich zu der eben genannten Ausgestaltung eines Absolutmodul kann die Auswerteschaltung auch ein Absolutmodul aufweisen, das ausgestaltet ist, das Absolutsignal aus dem Feinwert oder dem Feinwertsignal und der Feinwertperiodenanzahl zu erzeugen. In einer vorteilhaften Ausgestaltung stellt das Absolutmodul den innerhalb einer Feinwertperiode eindeutigen Feinwert lediglich hinter die Feinwertperiodenanzahl, wobei die beiden Signale so ausgestaltet sind, dass die sich daraus ergebende Kombination auch als Umdrehungszahl und Absolutwert gelesen werden kann.

Die Auswerteschaltung kann einen Taktgeber aufweisen, der ausgestaltet ist, ein Taktsignal zur Messung mit den Grobwertsensorelementen zu erzeugen. Im Gegensatz zu einer kontinuierlichen Messung kann eine getaktete Messung weniger Energie verbrauchen. Zwei aufeinander folgende Messungen sollten dabei so nahe beieinander liegen, dass eine eindeutige Bestimmung der Drehrichtung und Drehgeschwindigkeit möglich ist. Wie hoch eine Taktfrequenz sein sollte, lässt sich zum Beispiel aus dem zu beschleunigenden Massenträgheitsmoment und dem maximal anliegenden Drehmoment bestimmen, indem die maximale Beschleunigung errechnet und die Taktfrequenz entsprechend hoch gewählt wird. Alternativ kann der Fachmann die maximale Beschleunigung auch empirisch für das jeweilige System ermitteln.

Der Taktgeber kann in Abhängigkeit von einer Änderung der Winkelposition zwischen wenigstens zwei Taktfrequenzen umschaltbar ausgestaltet sein. Beispielsweise kann in eine höhere Taktfrequenz gewechselt werden, wenn sich das Drehelement schnell dreht, um die Drehrichtung und die Drehgeschwindigkeit auch bei höheren Drehzahlen eindeutig bestimmen zu können. Der Taktgeber kann ein Taktsignal mit einer niedrigeren Frequenz erzeugen, wenn sich das Drehelement nicht oder nur unwesentlich dreht. Sobald eine Drehung festgestellt wird, kann er in eine höhere Taktfrequenz wechseln.

Die Vorrichtung kann einen Energiesparzustand aufweisen, in dem die Grobwertsensorelemente elektrisch versorgt sind und der Feinwertgeber nicht elektrisch versorgt ist. Im Gegensatz zu einem Normalzustand, in dem die Vorrichtung komplett elektrisch versorgt ist, verbraucht der Energiesparzustand also weniger Energie. Er eignet sich insbesondere für Betriebsphasen, in denen die Vorrichtung autark betrieben werden soll.

Im Energiesparzustand kann bei dieser Ausgestaltung die Ermittlung des Feinwertsignals nicht erfolgen. Oftmals ist es jedoch ausreichend, wenn die Position nur grob bekannt ist. Dies kann akzeptabel sein, da beim Verlassen des Energiesparzustandes der mehrdeutige Feinwert wieder eindeutig zuordenbar ist. Dadurch, dass die Grobwertsensorelemente elektrisch versorgt sind, ist die Ermittlung eines Grobwertsignals im Energiesparzustand immer noch möglich. Insbesondere kann auch die Ermittlung der Feinwertperiodenanzahl oder der Umdrehungszahl im Energiesparzustand aufrechterhalten sein, um sicherzustellen, dass zu jeder Zeit wenigstens die Feinwertperiodenanzahl oder die Umdrehungen gemessen werden. Dazu ist es nicht notwendig, das Feinwertsignal zu kennen. Deshalb ist es nicht nötig, den Feinwertgeber elektrisch zu versorgen, d.h. ihn mit so viel elektrischer Leistung zu versorgen, dass eine Ermittlung des Feinwertsignals möglich ist. Beispielsweise können Feinwertsensoren im Energiesparzustand nicht elektrisch versorgt sein. Es kann in Einzelfällen ausreichend sein, wenn im Energiesparzustand auch nur Teile des Feinwertgebers, insbesondere Teile mit einem hohen Energieverbrauch, nicht versorgt sind.

Die Vorrichtung kann in einer Ausgestaltung einen Notbetriebszustand aufweisen, in dem der Taktgeber ein Taktsignal mit einer niedrigen Taktfrequenz erzeugt und einen Energiesparmesszustand aufweisen, in dem der Taktgeber ein Taktsignal mit einer höheren Taktfrequenz erzeugt. Im Notbetriebszustand wird also seltener gemessen. Bei Bedarf kann in den Energiesparmesszustand gewechselt werden, beispielsweise wenn es gewünscht ist, dass häufiger eine Messung erfolgt. Ein Wechsel vom Notbetriebszustand in den Energiesparmesszustand kann beispielsweise auch dann nötig sein, wenn die Drehung schneller wird. Dann ist es notwendig, mit einer höheren Frequenz zu messen, um immer noch eindeutige Drehrichtungs- und Drehgeschwindigkeitsinformationen erhalten zu können. Im Notbetriebszustand kann die Vorrichtung weniger Energie verbrauchen als im Energiesparmesszustand, beispielsweise weil weniger Teile der Vorrichtung elektrisch versorgt sind oder weil seltener gemessen wird.

Der Notbetriebszustand und der Energiesparmesszustand können insbesondere spezielle Ausgestaltungen des Energiesparzustands sein.

Eine Vorrichtung mit einem Notbetriebszustand und einem Energiesparmesszustand kann selbsttätig aus dem Notbetriebszustand in den Energiesparmesszustand wechseln, wenn sich die Winkelposition aus einem Ruhebereich mit einer vorgegebenen Winkelbreite heraus bewegt. Der Notbetriebszustand weist dabei eine Taktfrequenz auf, die zwar niedrig, aber immer noch hoch genug ist, um eine Drehung, insbesondere eine Drehrichtung, eindeutig erkennen zu können. Im Energiesparmesszustand ist die Taktfrequenz hoch genug, um eine eindeutige Bestimmung der Rotationsparameter an dem sich drehenden Drehelement zu messen. Der Wechsel kann erfolgen, wenn festgestellt wird, dass sich die Winkelposition aus einem Ruhebereich mit einer vorgegebenen Winkelbreite herausbewegt. Innerhalb des Ruhebereiches kann beispielsweise eine kleine Pendelbewegung stattfinden, ohne dass in die höhere Taktfrequenz geschaltet wird. Dadurch, dass ein Wechsel nicht sofort erfolgt, sondern nur wenn die Winkelposition den Ruhebereich verlässt, wird Energie gespart. Auch wird vermieden, dass eine nicht eindeutige Messung an einer Grenze zwischen zwei Teileinheiten, die mal den einen Wert und mal den anderen Wert annimmt, schon zu einem Wechsel in den energieintensiveren Energiesparmessmodus führt.

Um festzustellen, ob sich die Winkelposition innerhalb oder außerhalb des Ruhebereichs befindet, kann die Vorrichtung einen Speicher aufweisen. Ein solcher Speicher kann etwa zwei, drei, vier oder mehr erlaubte Positionswerte, beispielsweise Grobpositionswerte, speichern. Alternativ können auch nur die Grenzen des Ruhebereichs und/oder ein Anfangswert und eine Breite gespeichert sein. Durch Vergleich mit den Werten im Speicher kann festgestellt werden, ob sich die Winkelposition innerhalb des Ruhebereiches befindet. Die Vorrichtung kann ausgestaltet sein, selbsttätig aus dem Notbetriebszustand in den Energiesparmesszustand zu wechseln, wenn sich die Winkelposition aus dem Ruhebereich herausbewegt. Dies kann etwas durch einen Vergleich der momentanen Position mit den Werten für den Ruhebereich im Speicher festgestellt werden.

Der selbsttätige Wechsel vom Notbetriebszustand in den Energiesparmesszustand kann etwa dann erfolgen, wenn sich das Drehelement aus einem Ruhebereich, der dadurch bestimmt ist, dass an einer Position eines Sensors eine vorbestimmte Teileinheit oder eine Teileinheit aus einem vorbestimmten Bereich von mehreren Teileinheiten einer Maßverkörperung vorhanden ist, herausbewegt. Solange sich das Drehelement also nur so wenig bewegt, dass eine vorbestimmte Teileinheit oder eine Teileinheit aus einem vorbestimmten Bereich von mehreren Teileinheiten einer Maßverkörperung vor einem Sensor liegt, verbleibt die Vorrichtung im Notbetriebszustand. Sobald eine andere Teileinheit, die nicht in dem Ruhebereich liegt, vor dem Sensor liegt, wechselt die Vorrichtung in den Energiesparmesszustand. Insbesondere kann der Ruhebereich genau zwei Teileinheiten einer Maßverkörperung umfassen, so dass eine zufällig wechselnde Messung von zwei verschiedenen Teileinheiten als Ruhen und nicht als Bewegung interpretiert wird. Als Maßverkörperung kann auch die durch die versetzt angeordneten Grobwertsensorelemente erzeugte Einteilung einer vollständigen Umdrehung, beispielsweise in vier Quadranten, verstanden werden.

Um nicht unnötig Energie zu verbrauchen, kann die Vorrichtung ausgestaltet sein, in den Notbetriebszustand zu wechseln, wenn die Winkelposition in einem vorgegebenen Zeitraum in einem vorgegebenen Winkelbereich bleibt und/oder sich die Winkelposition in einem vorgegebenen Zeitraum nicht stärker als eine vorgegebene Winkelbreite verändert. Analog wie oben beschrieben, kann die Vorrichtung beispielsweise einen beschreibbaren und auslesbaren Speicher für Werte, etwa Positionswerte, aufweisen, und die Vorrichtung selbsttätig in den Notbetriebszustand wechseln, wenn innerhalb des vorgegebenen Zeitraums nur bestimmte Positionswerte gemessen werden. Dazu kann der momentane Positionswert mit den Speicherinhalten verglichen werden und festgestellt werden, ob sich die Winkelposition ausreichend stark verändert, d.h. ob sich das Drehelement noch ausreichend schnell dreht, oder ob das Drehelement ruht oder sich nur in einem bestimmten Bereich bewegt, beispielsweise pendelt.

Die Vorrichtung kann ausgestaltet sein, die Werte für den Ruhebereich im Speicher neu zu beschreiben, wenn die Vorrichtung in den Notbetriebszustand wechselt. Die genaue Lage des Ruhebereichs kann also dynamisch angepasst werden.

Die Vorrichtung kann ausgestaltet sein, in den Notbetriebszustand zu wechseln, wenn sich innerhalb eines bestimmten Zeitraumes nur eine bestimmte Teileinheit oder eine Teileinheit aus einem vorbestimmten Bereich von mehreren Teileinheiten einer Maßverkörperung vor der Position eines Sensorelementes befinden.

Die Vorrichtung kann eine interne Energiequelle, insbesondere eine Batterie oder einen Akkumulator, aufweisen, so dass die Vorrichtung in einem oder mehreren der Energiesparzustände, insbesondere im Notbetriebszustand und/oder im Energiesparmesszustand, autark ist und Energie nur aus dem internen Energiespeicher bezieht. Die interne Energiequelle kann also eine unterbrechungsfreie Stromversorgung gewährleisten. Die Vorrichtung kann so ausgestaltet sein, dass sie selbsttätig in einen der Energiesparzustände wechselt, wenn die Energie nur aus dem internen Energiespeicher bezogen wird. So kann beispielsweise im Falle eines Stromausfalles sichergestellt werden, dass die Position immer noch grob bestimmbar ist, und insbesondere die Umdrehungszahl und/oder die Feinwertperiodenanzahl des drehbaren Drehelementes mitgezählt wird.

Vorzugsweise sind alle Grobwertsensorelemente Hallsensoren. Diese ermöglichen eine Messung mit niedrigem Energieverbrauch, so dass in den Energiesparzuständen wenig Leistung aufgenommen wird. Sie liefern meist eine grobe Position, die auf eine halbe Umdrehung oder besser genau ist.

Um möglichst wenige Sensoren, die Energie aufnehmen, in der Vorrichtung zu haben, sind vorzugsweise genau zwei Grobwertsensorelemente vorhanden. Liefern beide eine Information, die auf eine halbe Umdrehung genau ist, so lässt sich aus der Kombination von zwei Grobwertsensorelementen schon eine Bestimmung auf 90° genau durchführen, was in Kombination mit einem magnetoresistiven Sensorelement in einem Feinwertgeber ausreichend ist. Alternativ können für eine höhere Auflösung in einem der Energiesparzustände auch drei Grobwertsensorelemente vorhanden sein.

Die oben stehenden Module können jeweils vereinzelt ausgebildet sein, beispielsweise mit jeweils dedizierten Schaltkreisen oder Chips. Alternativ können die Module auch in einem einzigen Chip vereint sein.

Die Erfindung ist hier exemplarisch als Vorrichtung dargestellt. Die Erfindung betrifft analog auch ein Verfahren. Ein erfindungsgemäßes Verfahren, das dem Hauptanspruch entspricht, ist also ein Verfahren zur Erfassung der absoluten Winkelposition eines drehbaren Drehelements, wie einer Welle, umfassend die Schritte: Erzeugen eines innerhalb einer vollständigen Umdrehung mehrdeutigen, absoluten Feinwertsignals mit einem Feinwertgeber; Erzeugen eines innerhalb einer vollständigen Umdrehung eindeutigen Grobwertsignals mit einem einzigen Satz von identischen Grobwertsensorelementen; und Erzeugen eines Absolutsignals aus dem Grobwertsignal und dem Feinwertsignal mit einer Auswerteschaltung, wobei in dem Absolutsignal ein innerhalb einer vollständigen Umdrehung eindeutiger Absolutwert und eine für die Anzahl der vollständigen Umdrehungen eindeutige Umdrehungszahl enthalten sind.

Im Folgenden wird die Erfindung anhand vorteilhafter Ausführungsformen beispielhaft beschrieben. Die einzelnen Weitergestaltungen und Ausführungsformen sind jeweils für sich vorteilhaft und können beliebig miteinander kombiniert werden.

Es zeigen:
- Fig. 1: einen schematischen Aufbau einer erfindungsgemäßen Vorrichtung;
- Fig. 2: schematisch den zeitlichen Verlauf einer getakteten Messung;
- Fig. 3: schematisch den Ablauf einer Prüfroutine zur Detektion einer Drehbewegung;
- Fig. 4: schematisch eine in vier Teilbereiche aufgeteilte Winkelbewegung mit einem Ruhebereich;
- Fig. 5: eine in acht Teileinheiten eingeteilte Umdrehung mit einem zwei Teileinheiten umfassenden Ruhebereich; und
- Fig. 6: eine vorteilhafte Ausgestaltung der erzeugten Signale.

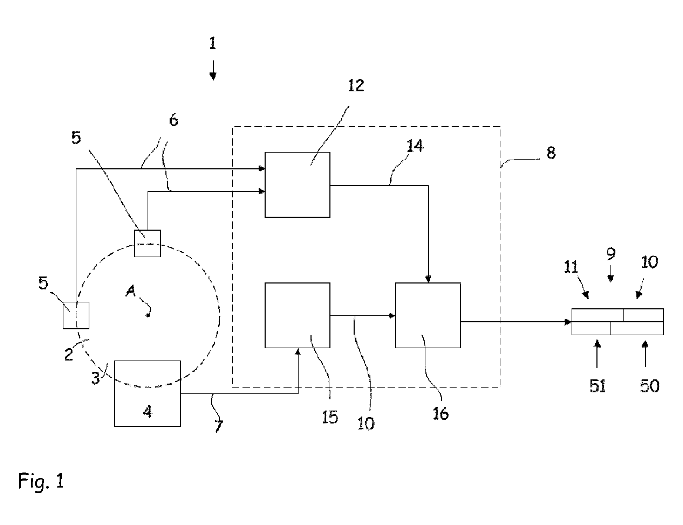

Fig. 1 zeigt eine erfindungsgemäße Vorrichtung 1 zur Erfassung der absoluten Winkelposition eines drehbaren Drehelementes 2, hier in Form einer Welle 3. Alternativ zu einer Welle 3 könnten auch andere Drehelemente, etwa Zahnräder, Scheiben oder Ringe, mit der Vorrichtung 1 überwacht werden.

Die Welle 3 kann um eine senkrecht zur Zeichenebene gelegene Achse A rotieren. Mithilfe der Vorrichtung 1 können die Winkelposition und daraus ableitbare Größen wie etwa die Winkelgeschwindigkeit, die Drehrichtung und die Anzahl der vollständig durchgeführten Umdrehungen ermittelt werden.

Die Vorrichtung 1 verfügt über einen Feinwertgeber 4, der zum Beispiel aus einem Feinwertsensor und zugehöriger Elektronik bestehen kann. Der Feinwertgeber 4 kann im Betrieb ein innerhalb einer vollständigen Umdrehung mehrdeutiges, absolutes Feinwertsignal 7 erzeugen. Der Feinwertgeber 4, der beispielsweise als magnetoresistiver, optischer oder induktiver Feinwertsensor mit angeschlossener Elektronik ausgebildet sein kann, liefert ein innerhalb einer Feinwertperiode eindeutiges Feinwertsignal 7.

Das Feinwertsignal 7 kann in einem Feinwertmodul 15 zu einem Feinwert 10 weiterverarbeitet werden, beispielsweise kann es digitalisiert werden.

Des Weiteren verfügt die Vorrichtung 1 über zwei identische Grobwertsensorelemente 5, durch die im Betrieb ein innerhalb einer vollständigen Umdrehung eindeutiges Grobwertsignal 6 erzeugt werden kann. Dies wird hier dadurch erreicht, dass die zwei Grobwertsensorelemente 5 um 90° versetzt an der Wele 3 angeordnet sind. Bei den hier gezeigten Grobwertsensorelementen 5 handelt es sich um Hallsensoren, die jeweils nur messen, ob der eine oder der andere Halbkreis eines in zwei gleiche Teile geteilten Umfangs vor ihnen liegt. Durch den 90°-Versatz kann aus diesen beiden Werten ein auf 90° genaues, innerhalb einer vollständigen Umdrehurg eindeutiges Grobwertsignal 6 erzeugt werden.

Das Grobwertsignal 6 und/oder das Feinwertsignal 7 können beispielsweise als analoges oder als digitales Signal ausgestaltet sein. Sie können etwa jeweils als ein oder mehrere über einen Messzeitraum gleichbleibende Werte vorliegen oder als Datenpaket mit zeitlich hintereinander liegenden Informationen ausgegeben werden. Das Grobwertsignal 6 kann beispielsweise als 2- oder 4-Bit-Information vorliegen. Das Feinwertsignal 7 kann beispielsweise als 13-Bit-Information vorliegen. Um Fehler korrigieren zu können, können Informationen auch mehrfach vorhanden sein.

Die Vorrichtung 1 verfügt des Weiteren über eine Auswerteschaltung 8, durch die aus dem Grobwertsignal 6 und dem Feinwertsignal 7 ein Absolutsignal 9 erzeugbar ist. Das Absolutsignal 9 umfasst einen innerhalb einer vollständigen Umdrehung eindeutigen Absolutwert 50 und eine für die Anzahl der vollständigen Umdrehungen der Welle 3 eindeutige Umdrehungszahl 51.

Im Gegensatz zu Vorrichtungen, wie sie aus dem Stand der Technik bekannt sind, umfasst die erfindungsgemäße Vorrichtung 1 nur einen einzigen Satz identischer Grobwertsensorelemente 5. Dies ermöglicht eine kompaktere Bauweise als die Vorrichtungen aus dem Stand der Technik. Ferner sind die erfindungsgemäßen Vorrichtungen 1 weniger teuer und weniger aufwändig in der Fertigung. Zusätzlich verbrauchen sie weniger Energie als die Vorrichtungen aus dem Stand der Technik.

Die in Fig. 1 gezeigte Auswerteschaltung 8 weist ein Multiturnmodul 12 auf, das beispielsweise ausgestaltet sein kann, das Grobwertsignal 6 in eine innerhalb einer vollständigen Umdrehung eindeutige Grobposition und eine wenigstens vollständige Umdrehungen repräsentierende Umdrehungszahl 51 aufzuteilen. Diese beiden Signale könnten dann zusammengefasst als ein Multiturnwert 14 an ein Absolutmodul 16 weitergegeben werden. In der hier gezeigten Ausgestaltung ist das Multiturnmodul 12 ausgestaltet, das Grobwertsignal 6 in eine innerhalb einer Feinwertperiode eindeutige Grobposition und eine wenigstens vollständige Feinwertperioden repräsentierende Feinwertperiodenanzahl 11 aufzuteilen. Diese beiden Signale werden dann zusammen als Multiturnwert 14 an das Absolutmodul 16 weitergeleitet.

Die Mehrdeutigkeit des Feinwertsignals 7 wird durch die Information aus der Grobposition aufgelöst, so dass es, falls notwendig, möglich ist, in dem Absolutmodul 16 den Absolutwert 50 zu ermitteln.

Alternativ zu der Ausgestaltung mit dem Multiturnmodul 12 könnte das Grobwertsignal 6 auch direkt in ein entsprechend ausgestaltetes Absolutmodul 16 eingespeist werden, das aus dem Feinwertsignal 7 und dem Grobwertsignal 6 den Absolutwert 50 ermittelt.

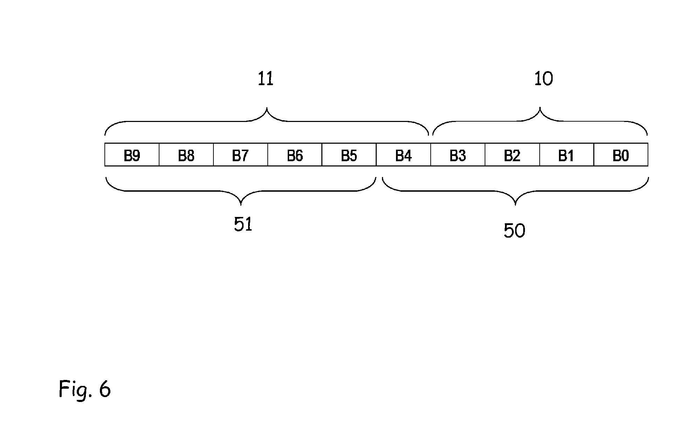

Die Auswerteschaltung 8 weist ein Absolutmodul 16 auf, das ausgestaltet ist, aus dem innerhalb einer Feinwertperiode eindeutigen Feinwert 10 und der Feinwertperiodenanzahl 11 das Absolutsignal 9 zu erzeugen. Dazu stellt es die beiden Signale lediglich nebeneinander, da die beiden Signale so ausgestaltet sind, dass sie nebeneinandergestellt auch als Umdrehungszahl 51 plus Absolutwert 50 interpretiert werden können. Eine genauere Erklärung findet sich in der Beschreibung zu Fig. 6. Alternativ kann das Absolutmodul 16 auch ausgestaltet sein, aus einem Absolutwert 50 und einer Umdrehungszahl 51 das Multiturnsignal 9 zu erzeugen.

In einem Normalzustand werden alle gezeigten Teile mit Energie versorgt. Um Energie zu sparen, können jedoch auch einige Teile nicht mit Energie versorgt sein. In einem Energiesparzustand sind die Grobwertsensorelemente 5 elektrisch versorgt, während der Feinwertgeber 4 nicht elektrisch versorgt ist. Dadurch ist es in diesem Energiesparzustand noch möglich die Position grob zu ermitteln und insbesondere die Umdrehungen und/oder die Feinwertperioden mit zu zählen.

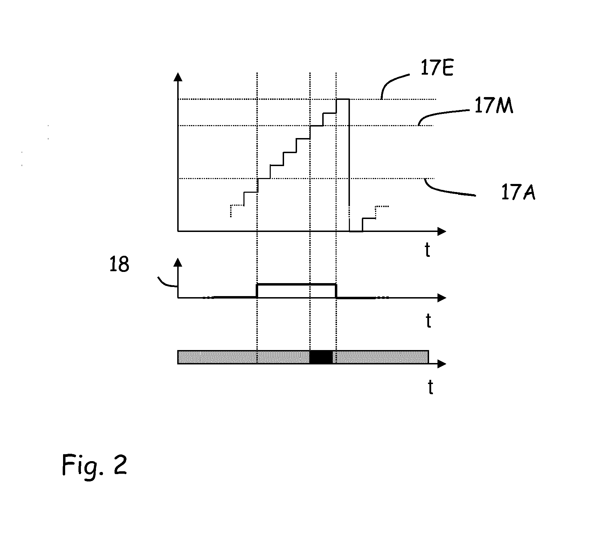

Die Grobwertsensorelemente 5 können getaktet betrieben werden, um Energie zu sparen. In Fig. 2 ist schematisch ein Ablauf einer solchen getakteten Messung gezeigt.

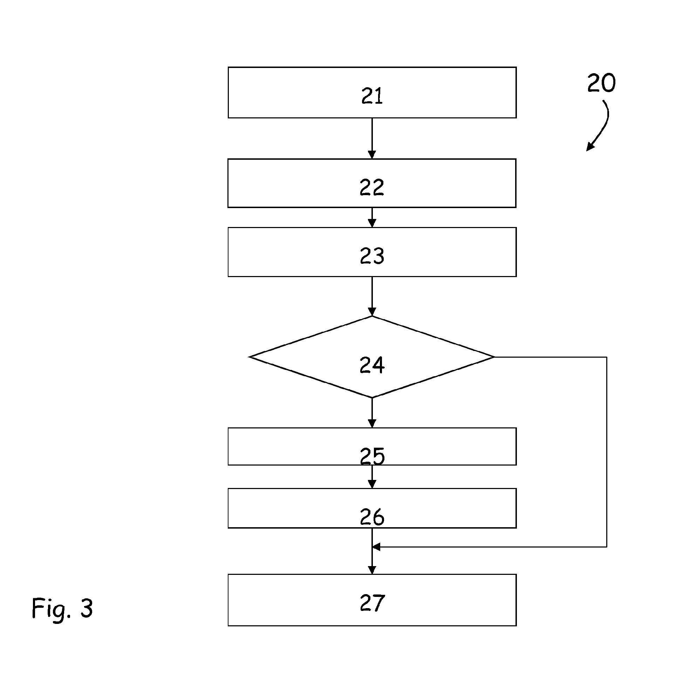

In der oberen Grafik ist ein zeitlicher Verlauf eines Zählsignals 17 dargestellt. Das Zählsignal 17 wird jeweils nach einem bestimmten Zählzeitraum um einen festgelegten Wert erhöht. Sobald das Zählsignal 17 einen Anfangswert 17A erreicht, wird ein Steuersignal 18 umgeschaltet, so dass die Grobwertsensorelemente 5 messen. Nachdem eine gewisse Anlaufzeit der Grobwertsensorelemente 5 vorüber ist, startet die in Fig. 3 gezeigte Prüfroutine, wenn das Zählsignal 17 den Messstartwert 17M erreicht. Nach dem Durchlaufen der Prüfroutine wird das Zählsignal 17 am Ende des entsprechenden Zählzeitraums wieder auf 0 zurückgesetzt. Bis zum erneuten Erreichen des Anfangswertes 17A findet keine Messung statt. Die Messung ist also getaktet, der zeitliche Abstand zwischen den zwei Zeitpunkten, zu dem das Zählsignal 17 den Anfangswert 17A erreicht, entspricht der Taktlänge, die der Kehrwert der Taktfrequenz ist.

In Fig. 3 ist eine Prüfroutine 20 schematisch dargestellt. Der erste Schritt 21 stellt den Beginn dar. Im zweiten Schritt 22 werden die Signale aus den Grobwertsensorelementen 5 ausgelesen. Im dritten Schritt 23 werden die Signale mit gespeicherten Signalen oder Werten verglichen. Im vierten Schritt 24 wird entschieden, ob sich das Drehelement 2 ausreichend stark gedreht hat, beispielsweise indem geprüft wird, ob sich die neuen Signale ausreichend von den gespeicherten Signalen unterscheiden. Falls dies der Fall ist, wird der fünfte Schritt 25 durchgeführt, in dem die neuen Signale gespeichert werden und anschließend im sechsten Schritt 26 die Position berechnet und gespeichert wird. Anschließend wird im siebten Schritt 27 die Routine 20 beendet. Falls im Schritt 24 festgestellt wird, dass sich das Drehelement 2 nicht ausreichend stark bewegt hat, weil sich beispielsweise die Signale nicht ausreichend stark von den gespeicherten Signalen unterscheiden, wird direkt zum siebten Schritt gegangen, so dass in diesem Fall die energieintensiven Schritte 25 und 26 übersprungen werden. Somit wird Strom gespart, indem die Position nicht wieder berechnet werden muss.

Bei der in Fig. 3 gezeigten Prüfroutine 20 kann mit dem Feinwertgeber 4 und den Grobwertsensorelementen 5 gemessen werden. Um Energie zu sparen, kann auch nur mit den Grobwertsensorelementen 5 gemessen werden. Der Feinwertgeber 4 kann dann nicht elektrisch versorgt sein, wodurch Energie gespart wird. Bei einer solchen Messung befindet sich die Vorrichtung 1 also in einem Energiesparzustand.

Die in Fig. 3 gezeigte Prüfroutine 20 wird nur zu bestimmten Zeitpunkten gestartet, wie in Fig. 2 erläutert. Die Messungen finden also getaktet statt. Die Zeit zwischen zwei Prüfroutinen 20 kann immer gleich sein. In einer vorteilhaften Ausgestaltung ist jedoch ein Taktgeber, der ein Taktsignal zur Messung mit den Grobwertsensorelementen erzeugt, so ausgestaltet, dass er in Abhängigkeit von einer Änderung der Winkelposition zwischen wenigstens zwei Taktfrequenzen umschaltbar ist. Dreht sich das Drehelement 2 nicht oder nur innerhalb eines Ruhebereichs, so kann mit einer niedrigeren Taktfrequenz gemessen werden. Wird festgestellt, dass sich das Drehelement 2 aus dem Ruhebereich herausbewegt, kann zu einer höheren Taktfrequenz gewechselt werden.

Die gezeigte Vorrichtung weist einen Notbetriebszustand auf, in dem der Taktgeber ein Taktsignal mit einer niedrigeren Taktfrequenz erzeugt, und einen Energiesparmesszustand, in dem der Taktgeber ein Taktsignal mit einer höheren Taktfrequenz erzeugt. Der Notbetriebszustand und der Energiesparmesszustand sind Energiesparzustände. Werden im Notbetriebszustand und im Energiesparmesszustand jeweils die gleichen Messungen durchgeführt, so wird im Notbetriebszustand weniger Energie verbraucht als im Energiesparmesszustand.

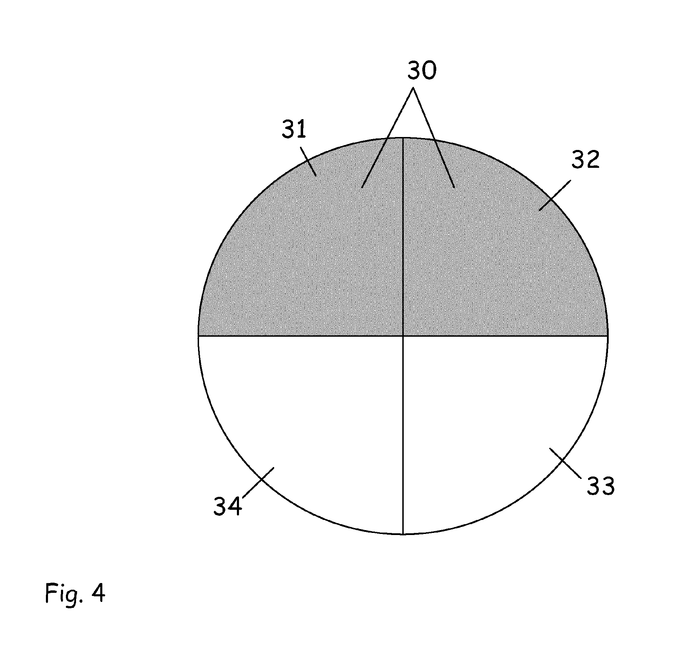

Die Vorrichtung wechselt selbsttätig aus dem Notbetriebszustand in den Energiesparmesszustand, wenn sich die Winkelposition des Drehelementes 2 aus einem Ruhebereich mit einer vorgegebenen Winkelbreite herausbewegt. Dies ist zum Beispiel in Fig. 4 dargestellt. Gezeigt ist hier die Einteilung einer vollen Umdrehung in vier Quadranten 31, 32, 33, 34 durch die um 90° versetze Anordnung der Grobwertsensorelemente 5. Als Ruhebereich 30 ist in Fig. 4 die Kombination aus dem ersten Quadranten 31 und dem zweiten Quadranten 32 festgelegt. Solange sich die Winkelposition des Drehelementes 2 im ersten Quadranten 31 oder im zweiten Quadranten 32 befindet, verweilt die Vorrichtung 1 im Notbetriebszustand. Der Ruhebereich 30 umfasst hier also einen Winkelbereich von 180°. Da der Ruhebereich 30 zwei Quadranten umfasst, kann ein andauerndes, unnötiges Wechseln vom Notbetriebszustand in den Energiesparmesszustand vermieden werden, wenn die Messung an der Grenze zwischen dem ersten Quadranten 31 und dem zweiten Quadranten 32 stattfindet. Bei Messung an der Grenze zwischen dem ersten Quadranten 31 und dem zweiten Quadranten 32 wechselt die ermittelte Position oft und zufällig, wodurch die Vorrichtung 1 unnötig oft in den Energiesparmesszustand wechseln würde, wenn der Ruhebereich 30 nur einen einzigen Quadranten umfassen würde. Umfasst der Ruhebereich 30 mehr als eine Teileinheit, also in diesem Fall mehr als einen Quadranten, so ist dieser unnötige Wechsel vermieden. Der Ruhebereich 30 kann dynamisch festgelegt werden, d. h. dass der Ruhebereich 30 definiert wird, wenn festgestellt wird, dass sich die Winkelposition innerhalb eines vorgegebenen Zeitraumes nicht stärker als um eine vorgegebene Winkelbreite verändert, d. h. dass sich das Drehelement 2 nur noch in einem Ruhebereich 30 mit einer vorgegebenen Breite befindet oder ruht. Die Vorrichtung 1 kann dann in den Notbetriebszustand wechseln.

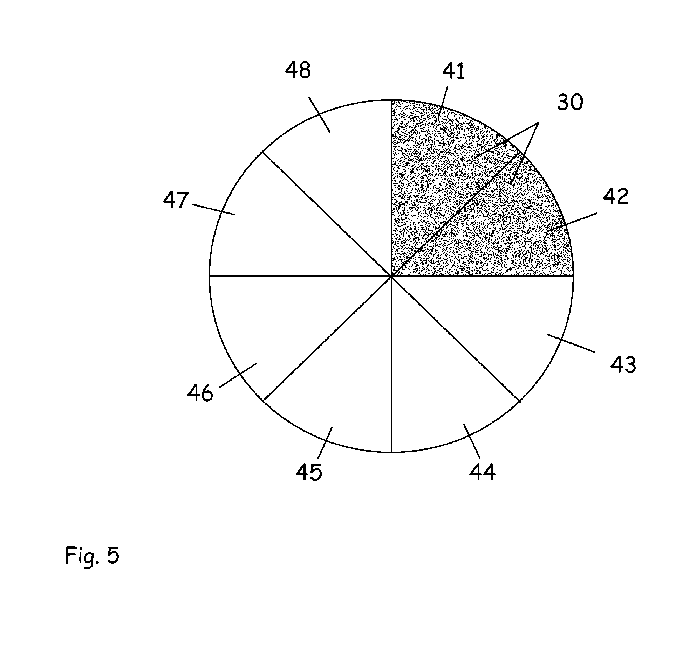

In Fig. 5 ist eine weitere Ausgestaltung gezeigt, bei der die Grobwertsensorelemente 5 die 360° einer vollen Umdrehung in acht gleich große Segmente 41 bis 48 unterteilt. Diese Segmente 41 bis 48 stellen also die Teileinheiten einer virtuellen Maßverkörperung dar.

In dem in Fig. 5 gezeigten Beispiel umfasst der Ruhebereich 30 das erste Segment 41 und das zweite Segment 42. Solange sich die Winkelposition in diesem Bereich befindet, wird im Notbetriebszustand mit der niedrigeren Taktfrequenz gemessen, wodurch weniger Energie verbraucht wird. Sobald registriert wird, dass sich die Winkelposition außerhalb des Ruhebereichs 30 befindet, also beispielsweise im dritten Segment 43 oder im vierten Segment 44, wird in den Energiesparmesszustand, also zu einer höheren Taktfrequenz gewechselt. Um sicherzustellen, dass die Drehrichtung richtig erkannt wird, darf sich die Winkelposition zwischen zwei Messungen nicht zu stark ändern. In dem in Fig. 5 gezeigten Beispiel darf sich die Winkelposition maximal um drei Segmente zwischen zwei Messungen ändern. Sonst kann die Drehrichtung nicht eindeutig interpretiert werden. Die Taktfrequenz des Notbetriebszustandes muss also an die maximal mögliche Beschleunigung der Vorrichtung angepasst sein.

Wird festgestellt, dass sich das Drehelement 2 nicht mehr dreht oder nur noch Werte aus einem bestimmten Bereich annimmt, kann die Vorrichtung selbsttätig in den Notbetriebszustand zurückwechseln. Die genaue Position des Ruhebereichs 30 entlang des Umfangs kann dynamisch angepasst sein, d. h. der Ruhebereich muss nicht immer das erste Segment 41 und das zweite Segment 42 umfassen, sondern kann beispielsweise auch das fünfte Segment 45 und das sechste Segment 46 umfassen, wenn sich die Winkelposition für eine bestimmte Zeit nur innerhalb dieser zwei Segmente 45, 46 befindet. Dazu können Werte in einem Speicher, die den Ruhebereich definieren, neu beschrieben werden, wenn die Vorrichtung 1 in den Notbetriebszustand wechselt.

Der Ruhebereich 30 kann nicht nur zwei Segmente, sondern beispielsweise auch drei Segmente umfassen, wenn eine größere Bewegung toleriert werden soll. Um den Ruhebereich 30 zu definieren, kann die Vorrichtung 1 einen Speicher umfassen, in dem etwa Positionswerte, beispielsweise Grobwertsignale speicherbar sind. Der Speicher kann beispielsweise dafür ausgelegt sein, mehrere erlaubte Positionswerte zu speichern. Alternativ kann der Speicher beispielsweise so ausgelegt sein, dass nur ein Anfangswert und ein Endwert des Ruhebereichs 13 gespeichert werden oder dass nur ein Anfangswert und eine Breite speicherbar sind.

Die Vorrichtung 1 kann eine interne Energiequelle, insbesondere eine Batterie oder einen Akkumulator aufweisen, die dazu dient, in einem oder mehreren der Energiesparzustände, insbesondere im Notbetriebszustand und/oder im Energiesparmesszustand die Energie zur Messung mit den Grobwertsensorelementen bereit zu stellen. Die Vorrichtung 1 kann also in einem oder mehreren der Energiesparzustände autark sein und keine Energiezufuhr von außen benötigen. Dies kann beispielsweise sicherstellen, dass die Vorrichtung 1 zumindest ein Grobwertsignal 6 oder eine Umdrehungszahl 14 registriert, selbst wenn die Vorrichtung 1 aufgrund eines Stromausfalls oder zum Energiesparen nicht mit Netzspannung versorgt ist.

In Fig. 6 ist eine vorteilhafte Ausgestaltung gezeigt, bei der sich der Feinwert 10 und die Feinwertperiodenanzahl 11 durch einfaches Nebeneinanderstellen zu einem Absolutsignal 9 ergänzen, das die Umdrehungszahl 51 und den Absolutwert 50 umfasst. Alle Signale sind digital und werden durch Bits B0 bis B9 dargestellt, wobei B0 das Bit mit dem kleinsten Wert ist. Der Feinwert 10 umfasst 4 Bits, die Feinwertperiodenanzahl umfasst 6 Bits. Diese insgesamt 10 Bits können auch als eine 5 Bits umfassende Umdrehungszahl 51 und ein ebenfalls 5 Bits umfassender Absolutwert 50 interpretiert werden. Hier entspricht eine Umdrehung also zwei Feinwertperioden. Alternativ könnten auch 4, 8 oder allgemein 2 hoch N Feinwertperioden einer Umdrehung entsprechen. Der Überlappungsbereich aus Fig. 6 müsste dann 2, 3 oder allgemein N Bits breit sein.

## Patentansprüche

1. Vorrichtung (1) zur Erfassung der absoluten Winkelposition eines drehbaren Drehelements (2), wie einer Welle (3), mit einem Feinwertgeber (4), durch den im Betrieb ein innerhalb einer vollständigen Umdrehung mehrdeutiges, absolutes Feinwertsignal (7) erzeugbar ist, und mit einem einzigen Satz von identischen Grobwertsensorelementen (5), durch die im Betrieb ein innerhalb einer vollständigen Umdrehung eindeutiges Grobwertsignal (6) erzeugbar ist, und mit einer Auswerteschaltung (8), durch die aus dem Grobwertsignal (6) und dem Feinwertsignal (7) ein Absolutsignal (9) erzeugbar ist, wobei in dem Absolutsignal (9) ein innerhalb einer vollständigen Umdrehung eindeutiger Absolutwert (50) und eine für die Anzahl der vollständigen Umdrehungen eindeutige Umdrehungszahl (51) enthalten sind.

2. Vorrichtung (1) nach Anspruch 1, wobei die Auswerteschaltung (8) ein Multiturnmodul (12) aufweist, das ausgestaltet ist, das Grobwertsignal (6) in eine innerhalb einer vollständigen Umdrehung eindeutige Grobposition und eine wenigstens vollständige Umdrehungen repräsentierende Umdrehungszahl (51) aufzuteilen.

3. Vorrichtung (1) nach Anspruch 1 oder 2, wobei die Auswerteschaltung (8) ein Absolutmodul (16) aufweist, das ausgestaltet ist, den Absolutwert (50) aus dem Feinwertsignal (7) und dem Grobwertsignal (6) zu erzeugen.

4. Vorrichtung (1) nach Anspruch 2, wobei die Auswerteschaltung (8) ein Absolutmodul (16) aufweist, das ausgestaltet ist, den Absolutwert (50) aus dem Feinwertsignal (7) und der Grobposition zu erzeugen.

5. Vorrichtung (1) nach einem der Ansprüche 2 bis 4, wobei die Auswerteschaltung (8) ein Absolutmodul (16) aufweist, das ausgestaltet ist, aus dem Absolutwert (50) und der Umdrehungszahl (51) das Absolutsignal (9) zu erzeugen.

6. Vorrichtung (1) nach einem der Ansprüche 1 bis 5, wobei die Auswerteschaltung (8) ein Multiturnmodul (12) aufweist, das ausgestaltet ist, das Grobwertsignal (6) in eine innerhalb einer Feinwertperiode eindeutige Grobposition und eine wenigstens vollständige Feinwertperioden repräsentierende Feinwertperiodenanzahl (11) aufzuteilen.

7. Vorrichtung (1) nach Anspruch 6, wobei die Auswerteschaltung (8) ein Absolutmodul (16) aufweist, das ausgestaltet ist, aus dem Feinwert (10) und der Feinwertperiodenanzahl (11) das Absolutsignal (9) zu erzeugen.

8. Vorrichtung (1) nach einem der Ansprüche 1 bis 7, wobei die Auswerteschaltung (8) einen Taktgeber aufweist, der ausgestaltet ist, ein Taktsignal zur Messung mit den Grobwertsensorelementen (5) zu erzeugen.

9. Vorrichtung (1) nach Anspruch 8, wobei der Taktgeber in Abhängigkeit von einer Änderung der Winkelposition zwischen wenigstens zwei Taktfrequenzen umschaltbar ausgestaltet ist.

10. Vorrichtung (1) nach einem der Ansprüche 1 bis 9, wobei die Vorrichtung (1) einen Energiesparzustand aufweist, in dem die Grobwertsensorelemente (5) elektrisch versorgt sind und der Feinwertgeber (4) nicht elektrisch versorgt ist.

11. Vorrichtung (1) nach Anspruch 9 oder 10, wobei die Vorrichtung (1) einen Notbetriebszustand aufweist, in dem der Taktgeber ein Taktsignal mit einer niedrigen Taktfrequenz erzeugt, und mit einem Energiesparmesszustand, in dem der Taktgeber ein Taktsignal mit einer höheren Taktfrequenz erzeugt.

12. Vorrichtung (1) nach Anspruch 11, wobei die Vorrichtung (1) ausgestaltet ist, selbsttätig aus dem Notbetriebszustand in den Energiesparmesszustand zu wechseln, wenn sich die Winkelposition aus einem Ruhebereich (30) mit einer vorgegebenen Winkelbreite herausbewegt.

13. Vorrichtung (1) nach einem der Ansprüche 11 oder 12, wobei die Vorrichtung (1) einen Speicher aufweist und die Vorrichtung (1) ausgestaltet ist, selbsttätig aus dem Notbetriebszustand in den Energiesparmesszustand zu wechseln, wenn sich die Winkelposition aus einem Ruhebereich (30), der durch in dem Speicher gespeicherte Werte bestimmt ist, herausbewegt.

14. Vorrichtung (1) nach einem der Ansprüche 11 bis 13, wobei die Vorrichtung (1) ausgestaltet ist, in den Notbetriebszustand zu wechseln, wenn sich die Winkelposition in einem vorgegebenen Zeitraum nicht stärker als um eine vorgegebene Winkelbreite verändert.

15. Verfahren zur Erfassung der absoluten Winkelposition eines drehbaren Drehelements (2), wie einer Welle (3), über wenigstens zwei volle Umdrehungen, umfassend die Schritte
Erzeugen eines innerhalb einer vollständigen Umdrehung mehrdeutigen, absoluten Feinwertsignals (7) mit einem Feinwertgeber (4),
Erzeugen eines innerhalb einer vollständigen Umdrehung eindeutigen Grobwertsignals (6) mit einem einzigen Satz von identischem Grobwertsensorelementen (5), und
Erzeugen eines Absolutsignals (9) aus dem Grobwertsignal (6) und dem Feinwertsignal (7) mit einer Auswerteschaltung, wobei in dem Absolutsignal (9) ein innerhalb einer vollständigen Umdrehung eindeutiger Absolutwert (50) und eine für die Anzahl der vollständigen Umdrehungen eindeutige Umdrehungszahl (51) enthalten sind.
